(19) Europäisches Patentamt
European Patent Office
Office européen des brevets

(11) Publication number: **0 259 526 B1**

(12) # EUROPEAN PATENT SPECIFICATION

(45) Date of publication of patent specification: **18.09.91**

(51) Int. Cl.[5]: **C01B 33/34**, B01J 29/08, C10G 11/05

(21) Application number: **86306938.1**

(22) Date of filing: **09.09.86**

(54) **A high silica zeolite (ECR-17), a catalyst containing that zeolite, and a hydrocarbon conversion process using that catalyst.**

(43) Date of publication of application:
**16.03.88 Bulletin 88/11**

(45) Publication of the grant of the patent:
**18.09.91 Bulletin 91/38**

(84) Designated Contracting States:
**AT BE CH DE FR GB IT LI LU NL SE**

(56) References cited:
**EP-A- 0 131 726**
**GB-A- 2 076 793**
**US-A- 4 333 859**
**US-A- 4 477 336**

(73) Proprietor: **EXXON RESEARCH AND ENGINEERING COMPANY**
**P.O.Box 390, 180 Park Avenue**
**Florham Park, New Jersey 07932(US)**

(72) Inventor: **Beyerlein, Robert Allen**
**516 North Chestnut Street**
**Westfield New Jersey 07090(US)**
Inventor: **Kugler, Edwin Lee**
**RD2, Box 38B, Lannon Lane**
**Glen Gardner New Jersey 08826(US)**
Inventor: **Tunison, Mafer Eugene**
**11044 Meadow Lake Drive**
**Baton Rouge, Louisiana 70810(US)**
Inventor: **Vaughan, David Evan William**
**Box 596, RD5**
**Flemington New Jersey 08822(US)**

(74) Representative: **Somers, Harold Arnold et al**
**ESSO Engineering (Europe) Ltd. Patents & Licences Mailpoint 72 Esso House Ermyn Way**
**Leatherhead, Surrey KT22 8XE(GB)**

**EP 0 259 526 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### FIELD OF THE INVENTION

The present invention relates to a zeolite, designated as ECR-17, having a unique x-ray crystallographic pattern and a silica to alumina ratio greater than about 7. The invention also relates to a catalyst containing that zeolite and hydrocarbon conversion processes, in particular catalytic cracking of gas oils, using the resulting catalyst.

### BACKGROUND OF THE INVENTION

Zeolites, both natural and synthetic, have been used in a variety of catalytic and adsorptive operations. Most zeolitic materials are porous, ordered aluminosilicates having a definite (although often undetermined) crystal structure. The structure may have a number of smaller cavities interconnected by a number of still smaller channels. These cavities and channels are uniform in size within a certain zeolitic material. The above-mentioned catalytic and adsorptive processes make use of these cavities and channels since by proper choice of zeolite, the zeolite channels will preferentially interact with some molecules but not others.

Zeolites typically are describable as rigid three-dimensional frameworks of silica and alumina wherein the silica and alumina tetrahedra are linked through common oxygens. The charge balance of the zeolite may be satisfied by inclusion of a proton, metal, ammonium, or other cation. The catalytic and adsorptive properties of the zeolite may be varied by changing the ions within the zeolite. Conventional ion exchange techniques may be used to change those cations.

There are a large number of both natural and synthetic zeolitic structures. The wide breadth of such numbers may be understood by considering the work Atlas of Zeolite Structures by W. M. Meier and D. H. Olson.

Zeolites having high silica to alumina ratios are desirable for a number of reasons. They are useful in chemical processes which involve high temperatures since the zeolites are more thermally stable than those containing more aluminum. Additionally, catalysts using high silica zeolites have comparably less inherent acidity than would the same catalyst with a lower silica zeolite. High silica zeolitic structures such as dealuminated faujasite, dealuminated mordenite, ZSM-5, ZSM-11, etc. have important catalytic properties; particularly when the materials have ultra high si/Al ratios (e.g., $\geqq$ 100), near zero acidity and are exchanged with metals of Group VIII of the Periodic Table. These catalytic properties are characteristics typical only of the metal, when the shape selectivity of the selected zeolite is taken into account.

Although zeolites having silica to alumina ratios of less than six can be readily synthesized by a variety of methods, as disclosed, e.g., in U. S. Patent Nos. 2,882,244 and 4,178,352, methods for preparing faujasite polymorphs of higher ratios generally involve several weeks of crystallization and result in poor yields of product, as reported by Kacirek et al, J. Phy. Chem., 79, 1589 (1975). One successful method results in a high silica faujasite that contains $Cs^+$ cations trapped within the sodalite cage subunits of the structure and has a composition $(Na, Cs)_2O$: $Al_2O_3$: 5-7 $SiO_2$; see U. S. Patent No. 4,333,859.

The use of quaternary ammonium salts as templates or reaction modifiers in the preparation of synthetic crystalline aluminosilicates (zeolites), first discovered by R. M. Barrer in 1961, has led to preparation of zeolites with high silica to alumina ratios which are not found in nature. For example, U. S. Patent No. 4,086,859 discloses preparation of a crystalline zeolite thought to have the ferrierite structure (ZSM-21) using a hydroxyethyl-trimethyl sodium aluminosilicate gel. A review provided by Barrerin Zeolites, Vol I, p. 136 (October, 1981) shows the zeolite types which are obtained using various ammonium organic bases as the cation sources.

The Si/Al ratios of a variety of readily synthesized faujasite materials can be increased by a wide range of chemical or physical chemical treatments. These processes usually involve removal of Al from the zeolite framework and creation of a metastable defect structure, followed by filling the defects with Si from another part of the structure by further chemical treatments or hydrothermal annealing. Typical treatments use steam, e.g., U. S. Patent No. 3,293,192; acid leaching, e.g., U. S. Patent Nos. 3,480,390 and 3,506,400 or U. S. Patent No. 3,597,155 and Barrer and Makki, Canadian Journal of Chemistry, 42, (1964), p. 1481; treatments with EDTA, e.g., U. S. Patent Nos. 3,447,795 or 4,093,560; treatment with $SiCl_4$, Beyer and Belenyakja, Catalysis by Zeolites (edited by B. Imelik et al, Elsevier Press 1980) p. 203; treatment with $CHF_3$, i.e., 4,275,046; treatment with $SiF_4$, e.g., Eur. Pat. 100,544; or treatments with other chemicals. The faujasite products are often called 'ultra stable' (cf. Maher and McDaniel, Proceedings Intl. Conference on Molecular Sieves, London, 1967) because of their very high thermal stability.

A review of those earlier methods may be found in McDaniel and Maher, in Zeolite Chemistry and

Catalysis, J. A. Rabo (ed.), ACS Monograph 171, (1976), p. 285. Other dealumination techniques are known, although each particular zeolitic structure usually requires some modification of one or more of the known techniques to result in a stable material. These techniques include those found in U. S. Patent No. 3,551,353, to Chen, et al., which involves an alternating steam and acid treatment of a mordenite zeolite; U. S. Patent No. 3,591,488, to Eberly, et al., which involves heat treatment at a temperature of 800°F to 1,500°F in the presence of at least 2% water, treatment with pure steam, and optionally treatment with a dilute mineral acid or an organic acid chelating agent; U. S. patent No. 3,691,099, to Young, which involves treatment with an aqueous acid medium having a pH between 2 and 6 and in the presence of a water soluble salt preferably made up of a $C_1$-$C_8$ amine having a metallic cation; U. S. Patent No. 3,937,791, to Garwood, et al., suggests a treatment in aqueous solution at a temperature of 50°C to 100°C in the presence of a cationic form of chromium; U. S. Patent No. 4,273,753, to Chang, deals with a process for treating aluminosilicates with an inorganic halide or oxyhalide, e.g., $SiCl_4$, $PCl_3$, $TiCl_4$, $CrO_2Cl_2$, etc., at a temperature between about 140°C and 700°C; U. S. Patent No. 4,297,335, to Lok,et al., involves a treatment with a gas mixture comprising 0.1 to 20 percent fluorine, up to 21 percent oxygen, and the remainder inerts; and U. S. Patent No. 4,447,669, to Hamon, et al., utilizes a series of acid and hydrothermal treatments on a mordenite zeolite. Pal, et al., in Magyar Kemiai Folyoirat, 89, (1983),pp. 264-269, suggests the use of a number of halides or oxyhalides, e.g., $COCl_3$, NOCl, $SOCl_2$, $CCl_4$, $CHCl_3$, $BCl_3$, $PCl_3$, for zeolitic aluminosilicates. A similar process is also disclosed in Fejes, et al., React. Kimet. Catal. Lett., 14, No.4, pp. 481-488; and Fejes, et al., React. Kimet. Cata. Lett., 19, Nos. 1 & 2, pp. 239-242.

Heretofore, however, no high silica zeolites based on CSZ-1 have been produced. CSZ-1 zeolite has been speculated by others to have a structure of the genus first described as a theoretical model by Moore and Smith in Mineral Magazine, 33, (1964), 1008 and designated, as discussed above, "Structure 6" by Breck in Zeolite Molecular Sieves, J.Wiley Publ. (1974), p. 58. However, disclosed herein is some evidence that the structure may instead be one in which the included atoms have the same "connectivity" as does faujasite. But instead of having the symmetrical cubic unit cell or faujasite, the CSZ-1 unit cell (or at least the ECR-17 derivative unit cell) may be distorted along the body diagonal of the cube into a rhombohedral shape. Electron microscopy shows that the inventive material may also be a combination of the structure mentioned above. The species CSZ-1 was first disclosed in U. S. Patent No. 4,309,313 to Barrett, et al., issued January 5, 1982. Zeolite CSZ-1 has a broad compositional formula of 0.05 to 0.55 (Cs,Tl):0.45 to 0.95 $Na_2O$:$Al_2O_3$:3 to 7 $SiO_2$:0 to 10 $H_2O$. Enhancement of the $SiO_2$ to $Al_2O_3$ ratio is not suggested.

Although other cesium-containing zeolites are known, e.g., see U. S. Patent Nos. 3,405,044 to Goedertier, issued October 8, 1968; 3,904,738 to Robson, issued September 9, 1975; and 4,333,859 to Vaughan, et al., issued June 8, 1982, none of these zeolites are of the same structure as CSZ-1 nor do they have $SiO_2$:$Al_2O_3$ ratios greater than seven.

None of the cited literature suggests a zeolite having the x-ray pattern shown below and a $SiO_2$:$Al_2O_3$ greater than about 7, catalysts containing such zeolites, nor, therefore, processes for using these zeolites in catalysts in converting hydrocarbons.

## SUMMARY OF THE INVENTION

The present invention involves a high silica crystalline polymorph (zeolite), designated for convenience herein as ECR-17, having a specified powder x-ray diffraction pattern and a $SiO_2/Al_2O_3$ mole ratio of at least about seven. The material may contain up to about 0.5% by weight of sodium measured on an elemental basis. The silicon and aluminum ratios as defined herein are measured by $^{29}$Si-MASNMR. This measurement excludes detrital materials. The chemical composition for this zeolite, expressed in terms of mole ratios of oxides, is in the range:

$$(aH, bCs)_2O:Al_2O_3: x\ SiO_2$$

where $a = 0.6$ to 1, $b = 0$ to 0.4, $a + b = 1.0 \pm 0.05$ and $x \geqq 7$.

The aluminosilicate herein may be used as a sorbent or as a catalyst, e.g., as a hydrocarbon conversion catalyst for, e.g., cracking, hydrocracking, paraffin isomerization, aromatization, and alkylation. In either case, the material may be exchanged with cations from Groups I through VIII of the Periodic Table.

It will be understood that the compositions herein may contain some waters of hydration which may be at least partially removed prior to or as the zeolites are employed as sorbents or catalysts.

## BRIEF DESCRIPTION OF THE DRAWINGS

Figure 1 is an infrared (i.r.) spectra of several CSZ-1 zeolite samples.

Figure 2 is an i.r. spectra of several faujasite zeolite samples.

Figure 3 is a comparison between the i.r. spectrum of the CSZ-1 zeolite and the inventive product ECR-17 zeolite.

Figure 4 provides a comparison of $^{29}$Si-MASNMR for CSZ-1 and two ECR-17 materials. Material A is an $NH_4$-CSZ-1. Material C is an ECR-17 material produced by steaming Material A for two hours at a temperature of 750 °C and $P_{H2O}$ of 1/3 atmosphere and acid leaching in 0.1 N HCl for about 4 hours at 25 °C. Material D is an ECR-17 material produced by resteaming Material C for two hours at a temperature of 750 °C and

$$P_{H_2O}$$

of 1/3 atmosphere.

DESCRIPTION OF THE PREFERRED EMBODIMENTS

The aluminosilicate herein generally will have the formula, in terms of mole ratios of oxides, in the range:

$(aH, bCs)_2O:Al_2O_3:x\ SiO_2$

where a = 0.6 to 1, b = 0 to 0.4, a + b = 1.0 ± 0.5, and x ≧ 7.

The $SiO_2:Al_2O_3$ ratio preferably is in the range of about 8 to about 2,000. In the higher end of that range, the material is nearly pure silica. Most preferably, the $SiO_2:Al_2O_3$ ratio is in the range of about 10 to about 100. The material may contain up to about 0.5% by weight of sodium measured on an elemental basis. Additionally, unless deliberately exchanged with cations as will be discussed below, the inventive composition ECR-17 will desirably be in the hydrogen or proton form.

Minor variations in the mole ratios of the oxides within the ranges given in the chemical formulas above do not substantially alter the structure or properties of the zeolite. In addition, the zeolite may contain a number of waters of hydration. The amount of aluminosilicate is dried, and the manner in which the material is dealuminated.

ECR-17 is also identified by its x-ray pattern. Table 1 provides the general x-ray diffraction pattern for the aluminosilicate as made using CuKα source:

## Table 1

| d(Å) | I/Io |
|---|---|
| 14.1 - 13.8 | 100 ± 20 |
| 12.3 - 12.0 | 15 ± 10 |
| 8.7 - 8.47 | 30 ± 10 |
| 7.36 - 7.18 | 22 ± 10 |
| 7.07 - 6.90 | 22 ± 10 |
| 5.63 - 5.49 | 30 ± 10 |
| 4.71 - 4.59 | 15 ± 10 |
| 4.34 - 4.23 | 35 ± 10 |
| 4.15 - 4.04 | 25 ± 10 |
| 4.07 - 3.98 | 30 ± 10 |
| 3.68 - 3.60 | 40 ± 10 |
| 3.41 - 3.31 | 70 ± 20 |
| 3.28 - 3.20 | 25 ± 10 |
| 3.15 - 3.09 | 30 ± 10 |
| 3.00 - 2.92 | 55 ± 20 |
| 2.94 - 2.77 | 60 ± 20 |
| 2.69 - 2.62 | 12 ± 5 |

These data may be approximately indexed either using a hexagonal unit cell with lattice parameters in the range $17.40 \geqq a \geqq 16.9$ Å and $28.3 \geqq c \geqq 27.55$ Å or using a rhombohedral unit cell with lattice parameters in the range $17.40 \geqq a > 17$ and $59° \leqq \alpha rh \leqq 60°$. Within these ranges, the larger lattice parameters are generally associated with the lower silica crystalline polymorphs of ECR-17. The smaller lattice parameters are associated with higher silica polymorphs. For any crystalline polymorph in the ECR-17 family, the hexagonal ratio $c/a = 1.63 \pm 0.01$.

Furthermore, on the basis of the close correspondence between the x-ray data given in Table 1 and with that for CSZ-1, the structure of ECR-17 appears to be very similar to that of CSZ-1. The ECR-17 and CSZ-1 zeolites are quite different from the faujasites. For instance, Figure 1 shows the infrared spectra of several CSZ-1 materials of varying Si/Al ratios, made by various methods of preparation, or having different cations exchanged thereon. Spectra 1-A is from a very pure as-produced CSZ-1 material having a Si/Al ratio of about 2.8. Spectra 1-B is from a less exacting batch of material having Si/Al of about 2.45. Spectra 1-C is a sample of the spectra 1-B material having been ammonium exchanged. Each of these materials has a double peak in the 560-640 $cm^{-1}$ wavenumber range. These peaks are characteristic "chain frequency" modes associated with double 6-member rings. See, E. M. Flanagen, in Zeolite Chemistry and Catalysis, supra, p. 89 et seq. The fact that there are double peaks indicates that there are two separate types of double-six member rings; potentially one having longer bonds than the other. In contrast, the i.r. spectra of the faujasite NaY shown in Figure 2 has but a single peak in the analogous point at 565 $cm^{-1}$ indicating but a single type of six-number ring.

The $^{29}$Si-MASNMR measurements of high silica ECR-17 materials also show a clear distinction from faujasite. For instance, in Figure 4 (discussed in more detail below), spectrum D shows a result for an ECR-17 material having a level of dealumination (Si/Al≈18) such that the spectrum is contributed almost entirely

by Si atoms which have no Al near neighbors. Measurements on other highly dealuminated zeolites demonstrate that their $^{29}$Si-MASNMR spectra indicate the minimum number of inequivalent silicon sites in the structure. Compare, C. A. Fyfe et al, Nature 296, (1982), pp. 530 to 533 and Chem. Letters, (1984) pp. 163 to 164. The four peak spectrum of Figure 4D indicates the presence of four inequivalent silicon sites. High silica faujasite, on the other hand, displays only one strong peak in the $^{29}$Si-MASNMR spectrum thus indicating that faujasite possesses only one crystallographic site for silicon. Clearly then, the ECR-17 structure is distinctly different from the faujasite structure and has several different features.

The characteristic "chain frequency" peak in the i.r. spectra also may be used as a qualitative measure of relative Si/Al ratio. For instance, the NaY material shown in Figure 2 has the double six-ring peak at 565 $cm^{-1}$. The framework Si/Al ratio for the material is about 2.3. However, for LZ-Y82 (a partially dealuminated faujasite made by Union Carbide) the peak has shifted to about 590 $cm^{-1}$. The Si/Al ratio for the framework is about 5. Finally, the peak has shifted to 610 $cm^{-1}$ for the lowest spectrum. This line is from another dealuminated faujasite (Union Carbide LZ-20) which was further treated after purchase to remove additional aluminum, i.e., by acid leaching. The framework Si/Al ratio for the treated LZ-20 is about 20.

This shift in chain-frequency is also observable in the ECR-17 material. Figure 3 shows the shift in the i.r. double peak near 600 $cm^{-1}$ from the low Si/Al CSZ-1 (Si/Al-2.5) to the high Si/Al inventive ECR-17 product (Si/Al-14).

The method used for dealumination in producing ECR-17 has not proved to be a critical part of the invention. The preferred method involves a combination of steam treatment and acid leaching, or chemical treatments with silicon halides. The zeolite ECR-17 may be produced from a base material CSZ-1 made in accordance with the teachings in U. S. Patent No. 4,309,313, supra. The CSZ-1 may first be exchanged with 10% to 25%, by weight, of an ammonium-bearing solution containing, e.g., $NH_4Cl$, to produce an ammonium exchanged zeolite. The exchange may be repeated as necessary or desired. Other soluble ammonium compounds are also acceptable.

The next step of the preferred dealumination method involves a staged heat treatment step. The zeolite is heated in dry air by increasing the temperature at a rate, e.g., of 3° C to 10° C/min., to some temperature intermediate between room temperature and the final treatment temperature. Steam, in an amount equal to a partial pressure of greater than about 0.1 atm, may be added during the latter portion of the heat-up step but generally before 500° C has been attained. The stabilization temperature is desirably in the range between 500° C and 800° C. The steaming usually proceeds for 1 to 3 hours and need not continue past 24 hours.

In the most preferred dealumination method, the zeolite is subjected to an acid leaching step after it has been cooled from the steaming step. The acid used is preferably a mineral acid, such as HCl, $HNO_3$ or $H_2SO_4$, but may also be weaker acids such as formic, acetic, citric, oxalic, tartaric acids and the like. The aqueous solution may contain acid in an amount between 0.01N and about 6N. The time needed to leach the zeolite down to the desired $Al_2O_3$ level may be shortened by increasing the leaching temperature. The degree to which the product maintains its crystallinity during the leaching step depends upon the temperature and the acid strength; at higher temperatures and acid strengths, the crystallinity may be adversely affected. Selection of a proper set of parameters may be easily accomplished by exposing several small portions of the beginning zeolite to a selection of temperatures and acid strengths and thereafter measuring the resulting crystallinity and $Al_2O_3$:$SiO_2$ ratio.

More highly dealuminated materials may be produced by repeating the procedure described above, e.g., ammonium exchange, high temperature steaming and acid leaching, one or more times. The extent of dealumination will depend upon the partial pressure of the steam, the acid strength, acid leaching temperature and duration within a given cycle time and the number of cycles employed.

As mentioned above, however, other dealumination techniques, e.g., EDTA and liquid or gas phase halide or oxyhalide treatments, are seen to be effective in dealuminating the starting zeolite.

Although in some circumstances ECR-17 may be used in the as-produced form as a catalyst, it is far more common that a zeolite catalyst will be fabricated with a binder, typically alumina, silica, various mineral oxides or hydroxides, or clays or it is of the zeolite as a catalyst.

Conversion of ECR-17 into a particulate cracking catalyst may be achieved by dispersing finely divided ECR-17 into an organic oxide matrix. The inorganic oxide matrix may be such materials as silicaalumina, alumina, silica sols or hydrogels, either alone or in combination with additives such as clay, e.g., kaolin, and other zeolites, e.g., ZSM-type zeolites, clinoptilolite, mordenite, and other natural or synthetic zeolites. The catalyst compositions may be prepared as taught in U.S. Pat. No. 3,957,689. That patent suggests combining a finely divided zeolite and a clay with an aqueous slurry which is spray dried and ion exchanged to produce a highly active hydrocarbon conversion catalyst.

Alternatively, the method shown in Canadian Patent No. 967,136 may be used to produce a zeolite

catalyst composition. That process generally involves the combination of a zeolite and clay with an acid alumina sol binder.

The process shown in U.S. Pat. No. 3,912,611 discloses another acceptable method in which a zeolite is mixed with a silica-alumina hydrogel binder to produce a suitable catalyst.

As was noted above, either the zeolite or the resulting composition may be exchanged with various ions depending upon the use to which the composition is put. The cations which may partially or fully replace the ions within the zeolite may be cations of one or more metals from any one of Groups I through VIII of the Periodic Table or rare earth metals. Preferably, the cations will be mono-, di- and trivalent metal cations, particularly from Groups I, II or III of the Periodic Table, such as barium, calcium, cesium, lithium, magnesium, potassium, strontium, zinc, or the like, or hydrogen, rare earth metals, or ammonium ions. The presence of these exchangeable cations will generally not cause a substantial alteration of the crystal structure of the aluminosilicate. However, these cations often will greatly effect the acidity of the catalyst depending, of course, upon the nature of the cation and the degree of exchange. The least acidic materials will be those exchanged with ions of Group 1A. The ion exchange technique is not generally considered to be critical and an ion exchange technique such as that shown in e.g., U.S. pat. No. 3,216,789, may be employed.

When adding transition metal or noble metal components, the techniques of impregnation may be especially desirable. This is particularly true with ECR-17 since the aluminosilicate has a low ion exchange capacity which will not allow high loadings via ion exchange techniques.

## ANALYTICAL-PROCEDURES

A zeolite may be identified by its x-ray diffraction pattern and chemical composition obtained by a variety of bulk chemical analyses. The unit cell measurement for various faujasites, in particular, has become a measurement standardized (ASTM method D-3942-80) to reflect the Si/Al ratio of the pure sodium form of synthetic faujasite, e.g., D. W. Breck and E. M. Flanigen, "Molecular Sieves", Society of Chemistry and Industry, London, p. 47 (1968); E. Dempsey et al, J. Phys. Chem., 73, (1968), p. 387. Unfortunately, substitution of cations other than $Na^+$ into the zeolite renders the established "unit cell vs. composition" relationships valueless.

A valuable indirect measurement of Si/Al ratio has been developed recently which, to a first approximation, is not significantly influenced by variable cation contents. This technique is known as $^{29}Si$-magic angle spinning nuclear magnetic resonance (MAS-NMR), and it is used to measure the average number of near neighbor framework Al atoms $\bar{n}$ for a Si atom in the framework, from which the overall Si/Al atoms ratio for the framework is readily calculated as discussed by Melchior et al., J. Amer. Chem. Soc., v. 104, p. 4859, (1982). These workers show that $\bar{n}$ and hence, Si/Al, can be determined from the position of the centroid of the $^{29}Si$-MASNMR spectrum whose value in terms of chemical shift (ppm), increases in magnitude as Si/Al increases. This procedure may be used to determine reliably framework Si/Al ratios for the high silica materials of this invention by observing the position (chemical shift) of the $^{29}Si$ MASNMR spectrum. Several $^{29}Si$ MASNMR spectra which were analysed in this fashion are shown in Figure 4. For each spectrum discussed, the centroid position, marked by the vertical tic mark, is effectively equivalent to the half area point (the chemical shift position), about which equal areas result from curve integration. These data clearly show the increasing shift of the centroid position to larger magnitude chemical shifts as framework Si/Al increases with the level of dealumination from 2.6 in the starting material to 18 in one ECR-17 product. Using an extension of the procedure outline by Melchior et al, supra, the relationship between the $^{29}Si$-MASNMR centroid position and framework composition (Si/Al) in ECR-17 can be determined.

In general, $^{29}Si$ and $^{27}Al$ MAS-NMR give a more reliable measure of the number of framework Si and Al atoms in a sample than would a comparable bulk chemical test. The MAS-NMR ignores detrital or non-framework Si and Al atoms and is sensitive only to those Si and Al atoms which are in a particular spatial relationship to each other as defined by the tetrahedrally linked framework. There is no way to make such a differentiation in a bulk chemical test which will include, for example, any Si or Al atoms present in an amorphous aluminosilicate phase as well as Si and Al atoms in the framework.

Additionally, the $^{29}Si$ MAS-NMR spectra for the more highly dealuminated materials reveal valuable insight regarding the structure of the materials of this invention. For the Figure 4 material C with Si/Al $\approx$ 18, the level of dealumination is such that the spectrum is contributed almost entirely by Si atoms which have no Al near neighbors.

## EXAMPLES

The examples which follow illustrate the invention. In all examples, parts and percentages are given by weight and temperatures in degrees Centigrade unless otherwise noted.

Example 1

A CSZ-1 base material (made according to the teachings of U. S. Patent No. 4,340,573) was filtered, washed with 2 liters of water and dried at 110°C overnight. Chemical analysis showed the beginning material to have the composition:

$0.63\ Na_2O:0.37\ Cs_2O:5.36SiO_2:Al_2O_3$

An 80 gm. sample of this material was exchanged with a solution of 80 gm. $NH_4Cl$ in 650 ml. of $H_2O$ for one hour, then filtered and washed with 800 ml. $H_2O$. The ammonium exchange was repeated once. X-ray diffraction analysis on the Material A product showed the unit cell to be hexagonal with axes of a = 17.39Å c = 28.34Å. The sample wash then steamed for two hours at a temperature of 750°C and a steam partial pressure of 0.33 atm. (Prior to holding at this temperature the sample was first heated to 300°C in dry air at about 6°C/min., at which time steam was introduced, and the temperature raised at the same rate). The Material B product had hexagonal lattice parameters of a = 17.18Å, c = 28.01Å, the reduction in lattice parameters indicating major framework dealumination. The typical x-ray diffraction pattern is given in Table II, below. The sample was then acid leached for four hours at 25°C using a solution of 0.1N hydrochloric acid, and an acid/zeolite ratio of 100 by weight. This Material C sample was approximately indexed on a hexagonal unit cell with lattice parameters of a = 17.125Å, and c = 27.90Å. $^{29}$Si-MASNMR analysis showed the ECR-17 (Material B) to have an Si/Al ratio of about 7 and Material C to have a Si/Al ratio of about 8.

Figure 4 compares the $^{29}$Si-MASNMR spectra for CSZ-1, Material A and Material C.

Table II

X-ray Diffraction Patterns for ECR-17 Samples

| Material B | | Material C | |
|---|---|---|---|
| $d_{obs}$ | $I/I_o$ | $d_{obs}$ | $I/i_o$ |
| 13.96 | 100 | 13.93 | 100 |
| 12.12 | 15 | 12.16 | 20 |
| 8.61 | 20 | 8.60 | 30 |
| 7.30 | 15 | 7.28 | 25 |
| 7.03 | 15 | 7.00 | 28 |
| 5.58 | 25 | 5.56 | 40 |
| 4.67 | 14 | 4.65 | 12 |
| 4.30 | 30 | 4.28 | 38 |
| 4.11 | 15 | 4.09 | 17 |
| 4.04 | 25 | 4.02 | 40 |
| 3.647 | 35 | 3.636 | 35 |
| 3.370 | 55 | 3.353 | 65 |
| 3.249 | 15 | 3.239 | 20 |
| 3.135 | 20 | 3.120 | 22 |
| 2.971 | 60 | 2.959 | 50 |
| 2.91 | 40 | 2.89 | 50 |
| 2.660 | 15 | 2.65 | 10 |

A catalyst was made by blending 3.41 gm. of Material B with 143.0 gm. of wet, high alumina synthetic gel FCC matrix (25% $Al_2O_3$). The gel had been previously exchanged twice with 5% ammonium sulfate solutions and washed twice with distilled water to remove sodium ions. The catalyst was dried at 100°C, calcined for 3 hours at 425°C, and then steamed 16 hours at 733°C. The resulting catalyst contains 15% zeolite (dry basis). The steam deactivated product was evaluated for cracking activity and selectivity with the ASTM feed (Amoco Oil No. FCC 983). The results of two separate runs are presented in Table III where they are compared with a similar catalyst made with a commercially available high silica dealuminated faujasite catalyst promoter (Union Carbide LZY-82). The major advantages of the ECR-17 promoted catalyst are higher gasoline ($C_5$-430°F) selectivity and lower amounts of the $C_1$-$C_4$ low value light products.

Example 2

A cracking catalyst was prepared by blending 3.14 gm. of steam dealuminated, acid leached ECR-17 with 121.4 gm. of a wet, high alumina synthetic gel FCC matrix (25% $Al_2O_3$). The whole was dried overnight at 110°C, calcined for 4 hours at 425°C, and then steamed 16 hours at 733°C. The resulting catalyst

contained 15.0% zeolite (dry basis). The steam deactivated product was evaluated for activity and selectivity with the ASTM Microactivity Test using the ASTM standard feed. The results are presented in Table III, and again shown higher liquid fuel yields and lower light gas yields.

**Table III**

**Microactivity Test Data for Catalyst Promoted With ECR-17**

| | Example 1 15% - ECR-17 | | Example 2 15% - ECR-17 | Comparative Example Union Carbide LZY82 |
|---|---|---|---|---|
| % Conversion | 73.6 | 75.0 | 70.5 | 69.8 |
| Yield on ff (wt.%) | | | | |
| $H_2$ | 0.04 | 0.04 | 0.04 | 0.06 |
| $C_1+C_2$ | 1.13 | 1.10 | 1.10 | 1.62 |
| $C_3$ | 4.52 | 4.39 | 4.75 | 6.34 |
| $C_4$ | 9.60 | 9.25 | 9.98 | 12.2 |
| $C_5$-430°F | 52.5 | 54.1 | 51.3 | 49.0 |
| 430-650°F | 18.2 | 17.6 | 20.3 | 20.0 |
| $650^+$ | 7.1 | 6.5 | 7.35 | 8.5 |
| Coke | 2.80 | -- | -- | 2.73 |
| $C_4^-/C_4^=$ | 1.49 | 1.65 | 1.25 | 1.21 |

Example 3

A 1.0 gm sample of Material C, described in Example 1, was resteamed at a temperature of 750 °C and a steam partial pressure

$$P_{H_2O} = 0.33 \text{ atm}$$

for a period of about 3 hours. The resulting Material D was then leached with 100 ml. of 0.1N HCl for 4

hours at ambient temperature. The zeolite was then filtered, washed and dried to produce Material E. The analysis by $^{29}$Si-MASNMR showed the ECR-17 Material D and Material E to have framework Si/Al ratios of about 18.

Example 4

1.2 gm. $(NH_4,Cs)$CSZ-1 (described in Example 1) was steamed for 24 hours at 750 °C and a steam partial pressure of about 0.25 atm. The product unit cell was $a_o$ = 17.12Å, $c_o$ = 28.16Å. The product was then leached with 140gm. 2N HCl solution for one hour at 60 °C, filtered, washed and dried. Electron microprobe analysis (EDXRA) gave an Si:Al ratio of 35, and showed that all the sodium and cesium had been removed. The crystalline product was clearly a very high silica ECR-17, although the peaks had been broadened.

Example 5

A 2 gm. sample of $(NH_4,Cs)$CSZ-1 was steamed for 24 hours at 750 °C using a steam partial pressure of about 0.25 atm. a 0.4 gm. sample of the product was then leached in 80 ml. 2N HCl at room temperature for 16 hours, filtered, washed and dried at 110 °C. Microprobe analysis showed the product ECR-17 to have an Si/Al ratio of 14.5. The x-ray diffraction data was lattice parameters of a = 16.9Å and c = 27.6Å after acid-leaching.

Example 6

A 20 gm sample of $(NH_4,Cs)$CSZ-1 was prepared in a manner similar to that described in Example 1 except, after the second ammonium exchange, the material was dried, calcined at 350 °C for 1 hr. ammonium exchanged again, rinsed and dried. A 3 gm. sample of this material spread in a thin layer of about 3 mm. was steamed at a temperature of 650 °C for two hr. using a steam partial pressure of about 0.33 atm. The product was given a single ammonium exchange and was then acid leached with 300 ml. of 0.033 N HCl with stirring for 4 hr. at 25 °C, filtered, washed and dried. Elemental analysis by Inductively Coupled Argon Plasma emission (ICAP) and atomic absorption (AA) showed the product to have a bulk Si/Al ratio of 3.36, a Cs/Al ratio of 0.04 and a Na/Al ratio of less than 0.01. $^{29}$Si MASNMR showed this material to have a framework Si/Al ratio of 7.4 and X-ray diffraction was approximately indexed to a hexagonal unit cell with lattice parameters a = 17.20Å and C = 28.05Å. This material showed sorption capacities of 22.3 wt% for water (at 32% R.H.) and 13.7 wt% for n-hexane.

Example 7

A 10 gm. sample of $(NH_4,C_s)$CSZ-1 (material A) prepared as described in Example 6 was reacted with ammonium hexafluorosilicate, $(NH_4)_2SiF_6$, in the following manner. A solution of 3.9 gm. of $(NH_4)_2SiF_6$ in 35 ml. of $H_2O$ was slowly added to a continuously stirred slurry of material A in 68 ml. $H_2O$ over a period of 6 hr. while maintaining a slurry temperature of 75 °C and using progressively increasing addition rates from an initial addition rate of 0.74 ml./hr. to a final addition rate of 13.3 ml./hr. A total of 15 gm. of ammonium acetate, $NH_4C_2H_3O_2$, was added incrementally to the slurry during this time period in order to maintain a pH of about 6. Stirring was maintained at 75 °C for a 30 min. period following the final addition of $(NH_4)_2SiF_6$, after which the sample was filtered and washed with 50 ml. $H_2O$, and was then washed with stirring and filtering three times with 150 ml. $H_2O$. Washing and filtering was repeated three times more with 150 ml. boiling $H_2O$ after which the filter cake was dried at 120 °C overnight. Elemental analysis by ICAP and AA showed the product to have an Si/Al ratio of 6.92 and a Cs/Al ratio of 0.12 with all sodium removed and a fluorine (F) content less than 0.4 wt%. $^{29}$Si MASNMR gave an Si/Al ratio of 7.5 for this material, and X-ray diffraction was approximately indexed to a hexagonal unit cell with lattice parameters of a = 17.17Å and c = 28.24Å. The capacity for adsorption of n-hexane of this material was 9.2 wt%.

Example 8

An 8 gm. sample of $(NH_4,Cs)$CSZ-1 (prepared as described in Example 6) was reacted with 3.1 gm. of ammonium hexafluorosilicate, $(NH_4)_2SiF_6$, in a similar manner as described in Example 7 except that the reaction was carried out under reflux conditions at 100 °C. The washing, filtering and drying steps were carried out as described in Example 6. Elemental analysis by ICAP and AA showed the resulting product to

have an Si/Al ratio of 7.01 and a Cs/Al ratio of 0.15. X-ray diffraction pattern was approximately indexed to a hexagonal unit cell with lattice parameters a=17.38Å and c=28.28Å. The capacity for adsorption of n-hexane of this material was 7.4 wt%.

Example 9

A 4 gm. sample of $(NH_4,Cs)$CSZ-1 prepared as described in Example 6 was reacted with 2.12 gm. of ethylene diaminetetraacetic acid, $H_4$EDTA, employing reflux conditions for a continuously stirred slurry of the solid in 175 ml. $H_2O$ and a Soxhlet extraction method for slow addition of $H_4$EDTA as described by Kerr, J. Phys. Chem. 72 2594 (1968). The reaction was allowed to proceed for 45 hr. after which all the $H_4$EDTA in the Soxhlet thimble had been exhausted. The product was filtered and washed with 50 ml. $H_2O$ and was then washed and filtered twice with stirring using 120 ml. boiling $H_2O$ and was finally dried at 120°C for 1 hr. Elemental analysis by ICAP and AA showed the product to have an Si/Al ratio of 5.47, a Cs/Al ratio of 0.23, and a Na/Al ratio of 0.023. X-ray diffraction pattern was indexed to a hexagonal unit cell with lattice parameters a=17.34Å and c=28.27Å.

## Claims

**1.** A zeolite having the following chemical composition, expressed in terms of mole ratios of oxides, in the range:

$(aH, bCs)_2O:Al_2O_3:x\ SiO_2$

where
a = 0.6 to 1,
b = 0 to 0.4,
a + b = 1.0 ± 0.05 and
$x \geqq 7$
and having a $CuK_\alpha$ x-ray diffraction pattern:

| d (Å) | I/Io |
|---|---|
| 14.1 - 13.8 | 100 ± 20 |
| 12.3 - 12.0 | 15 ± 10 |
| 8.7 - 8.47 | 30 ± 10 |
| 7.36 - 7.18 | 22 ± 10 |
| 7.07 - 6.90 | 22 ± 10 |
| 5.63 - 5.49 | 30 ± 10 |
| 4.71 - 4.59 | 15 ± 10 |
| 4.34 - 4.23 | 35 ± 10 |
| 4.15 - 4.04 | 25 ± 10 |
| 4.07 - 3.98 | 30 ± 10 |
| 3.68 - 3.60 | 40 ± 10 |
| 3.41 - 3.31 | 70 ± 20 |
| 3.28 - 3.20 | 25 ± 10 |
| 3.15 - 3.09 | 30 ± 10 |
| 3.00 - 2.92 | 55 ± 20 |
| 2.94 - 2.77 | 60 ± 20 |
| 2.69 - 2.62 | 12 ± 5. |

**2.** The zeolite of claim 2 wherein x is between about 8 and about 2,000.

**3.** The zeolite of claim 1 or claim 2 wherein H, Cs and Na ions are at least partially replaced with cations of one or more metals from Groups I to VIII of the Periodic Table, and ammonium.

**4.** A hydrocarbon conversion catalyst comprising a zeolite having the following chemical composition, expressed in terms of mole ratios of oxides, in the range:

$(aH, bCs)_2O:Al_2O_3:x\ SiO_2$

where
$a = 0.6$ to 1,
$b = 0$ to 0.4,
$a + b = 1.0 \pm 0.05$ and
$x \geqq 7$
and having a $CuK_\alpha$ x-ray diffraction pattern:

| d (Å) | I/Io |
|---|---|
| 14.1 - 13.8 | 100 ± 20 |
| 12.3 - 12.0 | 15 ± 10 |
| 8.7 - 8.47 | 30 ± 10 |
| 7.36 - 7.18 | 22 ± 10 |
| 7.07 - 6.90 | 22 ± 10 |
| 5.63 - 5.49 | 30 ± 10 |
| 4.71 - 4.59 | 15 ± 10 |
| 4.34 - 4.23 | 35 ± 10 |
| 4.15 - 4.04 | 25 ± 10 |
| 4.07 - 3.98 | 30 ± 10 |
| 3.68 - 3.60 | 40 ± 10 |
| 3.41 - 3.31 | 70 ± 20 |
| 3.28 - 3.20 | 25 ± 10 |
| 3.15 - 3.09 | 30 ± 10 |
| 3.00 - 2.92 | 55 ± 20 |
| 2.94 - 2.77 | 60 ± 20 |
| 2.69 - 2.62 | 12 ± 5. |

5. The catalyst of claim 4 wherein H, Cs and Na ions in said zeolite are at least partially replaced with cations of one or more metals from the Groups I through VIII of the Periodic Table, and ammonium.

6. The catalyst of claim 4 or claim 5 also containing a matrix component comprising alumina, clay, or other inorganic oxide.

7. The catalyst of any one of claims 4 to 6 wherein x is between about 8 and about 2,000.

8. A hydrocarbon conversion process comprising the steps of:

   contacting a hydrocarbon, under hydrocarbon conversion conditions, with a catalyst according to any one of claims 4 to 7 to produce a converted hydrocarbon material, and recovering the converted hydrocarbon material.

9. The process of claim 8 wherein the process is a cracking process.

## Revendications

1. Une zéolithe ayant la composition chimique suivante, exprimée en rapport molaire des oxydes, dans la gamme de :

   $(aH, bCs)_2O:Al_2O_3:x\ SiO_2$

   où
   a = 0,6 à 1,

b = 0 à 0,4,
a + b = 1,0 ± 0,05 et
x ≧ 7
et présentant le diagramme de diffraction des rayons X CuKα

| d(Å) | I/Io |
|---|---|
| 14.1 - 13.8 | 100 ± 20 |
| 12.3 - 12.0 | 15 ± 10 |
| 8.7 - 8.47 | 30 ± 10 |
| 7.36 - 7.18 | 22 ± 10 |
| 7.07 - 6.90 | 22 ± 10 |
| 5.63 - 5.49 | 30 ± 10 |
| 4.71 - 4.59 | 15 ± 10 |
| 4.34 - 4.23 | 35 ± 10 |
| 4.15 - 4.04 | 25 ± 10 |
| 4.07 - 3.98 | 30 ± 10 |
| 3.68 - 3.60 | 40 ± 10 |
| 3.41 - 3.31 | 70 ± 20 |
| 3.28 - 3.20 | 25 ± 10 |
| 3.15 - 3.09 | 30 ± 10 |
| 3.00 - 2.92 | 55 ± 20 |
| 2.94 - 2.77 | 60 ± 20 |
| 2.69 - 2.62 | 12 ± 5. |

2. La zéolithe selon la revendication 1, dans laquelle x est compris entre environ 8 et environ 2000.

3. La zéolithe selon la revendication 1 ou 2, dans laquelle les ions H, Cs et Na sont au moins partiellement remplacés par des cations d'un ou de plusieurs métaux des groupes I à VIII de la classification périodique des éléments et de l'ammonium.

4. Un catalyseur pour la conversion d'hydrocarbures comprenant une zéolithe ayant la composition chimique suivante, exprimée en rapport molaire des oxydes, dans la gamme de :

$(aH, bCs)_2O:Al_2O_3:Al_2O_3:x\ SiO_2$

où
a = 0,6 à 1,
b = 0 à 0,4,
a + b = 1,0 ± 0,05 et
x ≧ 7
et présentant le diagramme de diffraction des rayons X CuK

| d(Å) | I/Io |
|---|---|
| 14.1 - 13.8 | 100 ± 20 |
| 12.3 - 12.0 | 15 ± 10 |
| 8.7 - 8.47 | 30 ± 10 |
| 7.36 - 7.18 | 22 ± 10 |
| 7.07 - 6.90 | 22 ± 10 |
| 5.63 - 5.49 | 30 ± 10 |
| 4.71 - 4.59 | 15 ± 10 |
| 4.34 - 4.23 | 35 ± 10 |
| 4.15 - 4.04 | 25 ± 10 |
| 4.07 - 3.98 | 30 ± 10 |
| 3.68 - 3.60 | 40 ± 10 |
| 3.41 - 3.31 | 70 ± 20 |
| 3.28 - 3.20 | 25 ± 10 |
| 3.15 - 3.09 | 30 ± 10 |
| 3.00 - 2.92 | 55 ± 20 |
| 2.94 - 2.77 | 60 ± 20 |
| 2.69 - 2.62 | 12 ± 5. |

5. Le catalyseur selon la revendication 4, dans lequel les ions H, Cs et Na dans ladite zéolithe sont au moins partiellement remplacés par des cations d'un ou de plusieurs métaux des groupes I à VIII de la classification périodique des éléments et de l'ammonium.

6. Le catalyseur selon la revendication 4 ou 5 contenant également un composant de matrice constitué par de l'alumine, de l'argile ou un autre oxyde minéral.

7. Le catalyseur selon l'une quelconque des revendications 4 à 6, dans lequel x est compris entre environ 8 et environ 2000.

8. Un procédé de conversion d'hydrocarbures comprenant les étapes
de mise en contact d'un hydrocarbure, dans des conditions de conversion des hydrocarbures, avec un catalyseur selon l'une quelconque des revendications 4 à 7 en vue de produire une matière hydrocarbonée convertie et de récupération de la matière hydrocarbonée.

9. Procédé selon la revendication 8, dans lequel le procédé est un procédé de craquage.

**Patentansprüche**

1. Zeolith mit der folgenden chemischen Zusammensetzung, ausgedrückt durch Molverhältnisse von Oxiden, im Bereich:

$(aH, bCs)_2O:Al_2O_3:x\ SiO_2$

wo

a = 0,6 bis 1,
b = 0 bis 0,4,
a + b = 1,0 ± 0,05 und
$x \geqq 7$
und mit einem CuKα-Röntgenbeugungsmuster:

| d(Å) | | | I/Io |
|---|---|---|---|
| 14,1 | - | 13,8 | 100 ± 20 |
| 12,3 | - | 12,0 | 15 ± 10 |
| 8,7 | - | 8,47 | 30 ± 10 |
| 7,36 | - | 7,18 | 22 ± 10 |
| 7,07 | - | 6,90 | 22 ± 10 |
| 5,63 | - | 5,49 | 30 ± 10 |
| 4,71 | - | 4,59 | 15 ± 10 |
| 4,34 | - | 4,23 | 35 ± 10 |
| 4,15 | - | 4,04 | 25 ± 10 |
| 4,07 | - | 3,98 | 30 ± 10 |
| 3,68 | - | 3,60 | 40 ± 10 |
| 3,41 | - | 3,31 | 70 ± 20 |
| 3,28 | - | 3,20 | 25 ± 10 |
| 3,15 | - | 3,09 | 30 ± 10 |
| 3,00 | - | 2,92 | 55 ± 20 |
| 2,94 | - | 2,77 | 60 ± 20 |
| 2,69 | - | 2,62 | 12 ± 5. |

**2.** Zeolith nach Anspruch 1, worin x zwischen etwa 8 und etwa 2000 beträgt.

**3.** Zeolith nach Anspruch 1 oder nach Anspruch 2, worin H-, Cs- und Na-Ionen zumindest teilweise durch Kationen von einem oder mehreren Metallen der Gruppen I bis VIII des Periodensystems und Ammonium ersetzt sind.

**4.** Kohlenwasserstoffumwandlungskatalysator, umfassend einen Zeolith mit der folgenden chemischen Zusammensetzung, ausgedrückt durch Molverhältnisse von Oxiden, im Bereich:

$(aH, bCs)_2O:Al_2O_3:x\ SiO_2$

wo
a = 0,6 bis 1,
b = 0 bis 0,4,
a + b = 1,0 ± 0,05 und
$x \geqq 7$
und mit einem CuKα-Röntgenbeugungsmuster:

| d(Å) | | | I/Io |
|---|---|---|---|
| 14,1 | - | 13,8 | 100 ± 20 |
| 12,3 | - | 12,0 | 15 ± 10 |
| 8,7 | - | 8,47 | 30 ± 10 |
| 7,36 | - | 7,18 | 22 ± 10 |
| 7,07 | - | 6,90 | 22 ± 10 |
| 5,63 | - | 5,49 | 30 ± 10 |
| 4,71 | - | 4,59 | 15 ± 10 |
| 4,34 | - | 4,23 | 35 ± 10 |
| 4,15 | - | 4,04 | 25 ± 10 |
| 4,07 | - | 3,98 | 30 ± 10 |
| 3,68 | - | 3,60 | 40 ± 10 |
| 3,41 | - | 3,31 | 70 ± 20 |
| 3,28 | - | 3,20 | 25 ± 10 |
| 3,15 | - | 3,09 | 30 ± 10 |
| 3,00 | - | 2,92 | 55 ± 20 |
| 2,94 | - | 2,77 | 60 ± 20 |
| 2,69 | - | 2,62 | 12 ± 5. |

5. Katalysator nach Anspruch 4, worin H-, Cs- und Na-Ionen in dem Zeolith zumindest teilweise durch Kationen von einem oder mehreren Metallen der Gruppen I bis VIII des Periodensystems und Ammonium ersetzt sind.

6. Katalysator nach Anspruch 4 oder 5, der auch eine Matrix-Komponente - umfassend Aluminiumoxid, Ton oder ein anderes anorganisches Oxid - enthält.

7. Katalysator nach einem der Ansprüche 4 bis 6, worin x zwischen etwa 8 und etwa 2000 liegt.

8. Kohlenwasserstoffumwandlungsverfahren, umfassend die Schritte: In-Kontakt-Bringen eines Kohlenwasserstoffes unter Kohlenwasserstoffumwandlungsbedingungen mit einem Katalysator nach einem der Ansprüche 4 bis 7 zur Produktion eines umgewandelten Kohlenwasserstoffmaterials und Gewinnung des umgewandelten Kohlenwasserstoffmaterials.

9. Verfahren nach Anspruch 8, worin das Verfahren ein Crack-Verfahren ist.

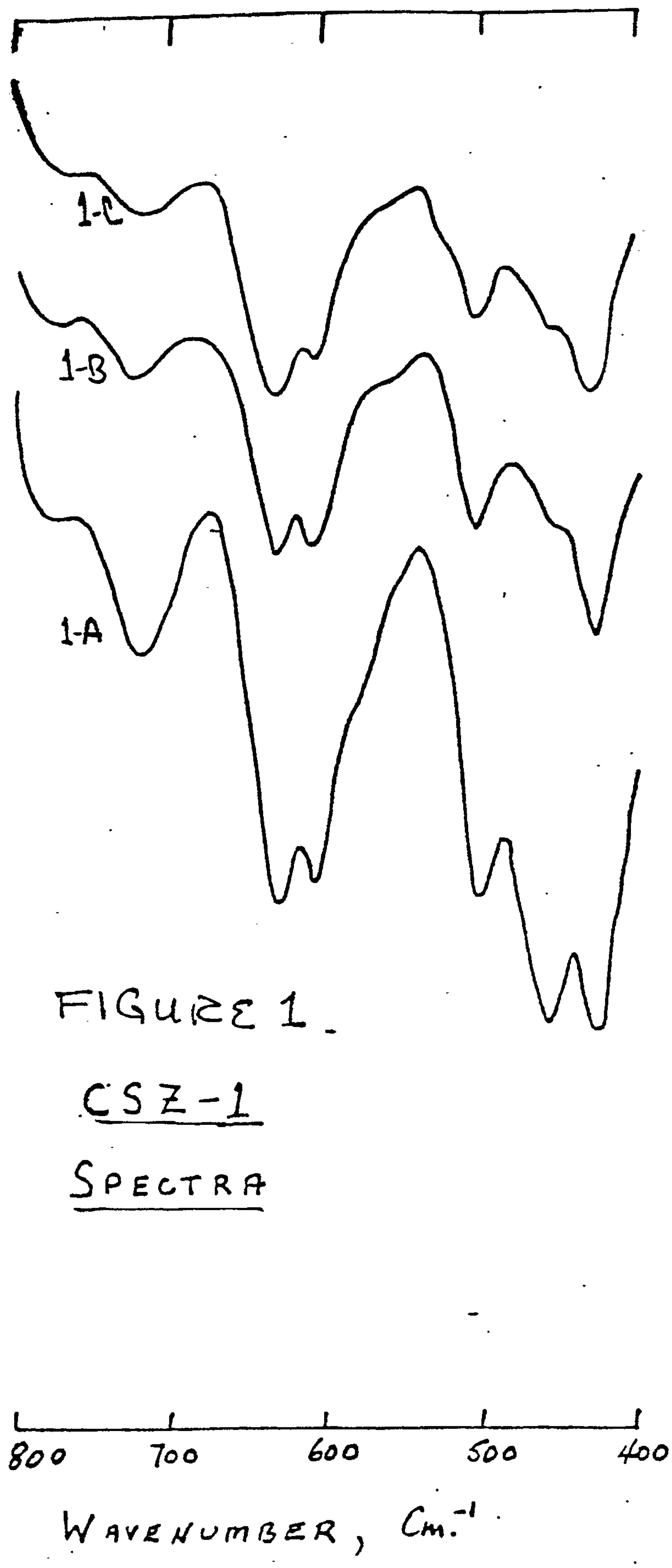


FIGURE 1

CSZ-1

SPECTRA

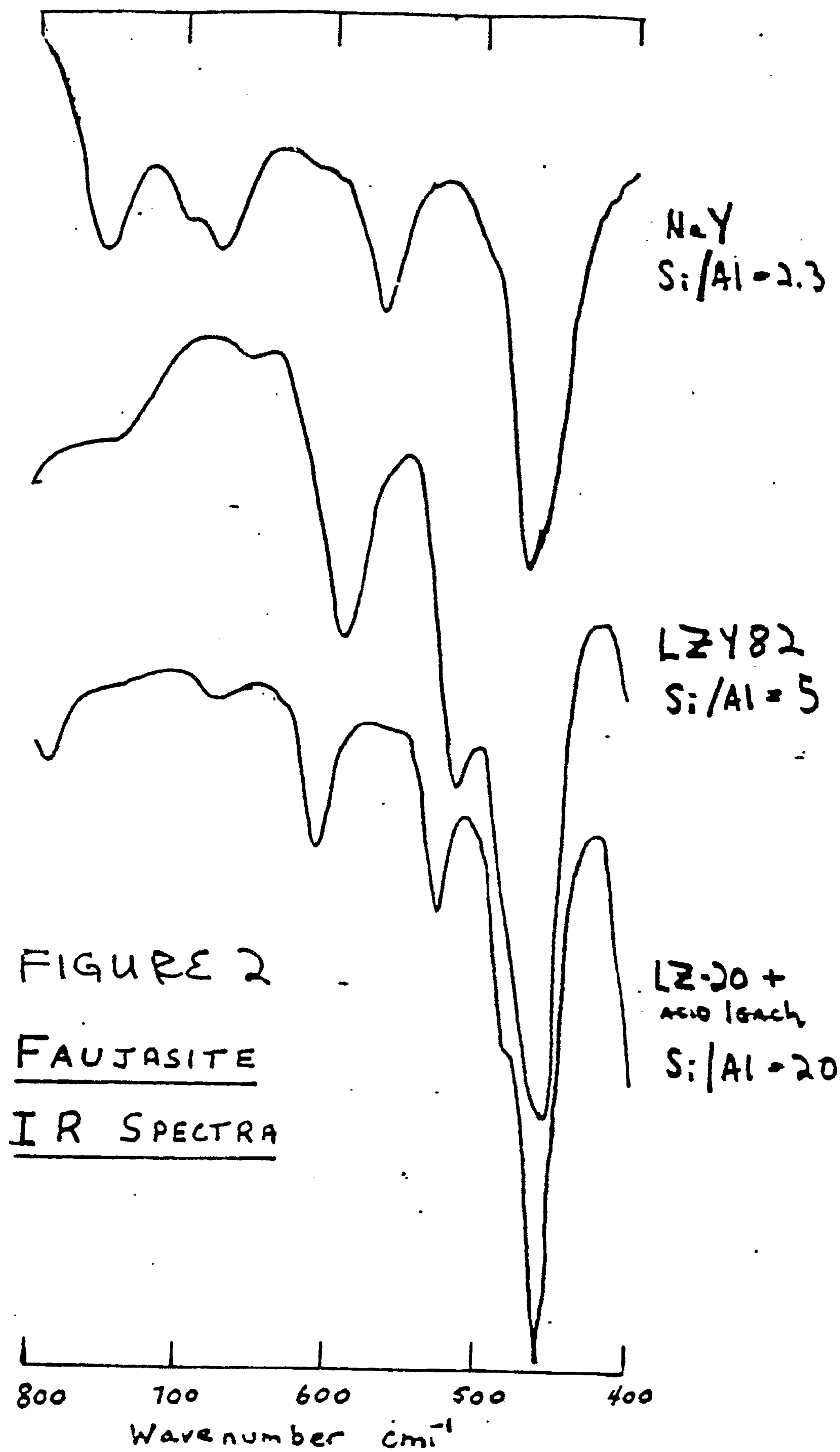
NaY
Si/Al = 2.3
LZY82
Si/Al = 5
LZ-20 +
acid leach
Si/Al = 20
FIGURE 2
FAUJASITE
IR SPECTRA
800
700
600
500
400
Wavenumber cm⁻¹

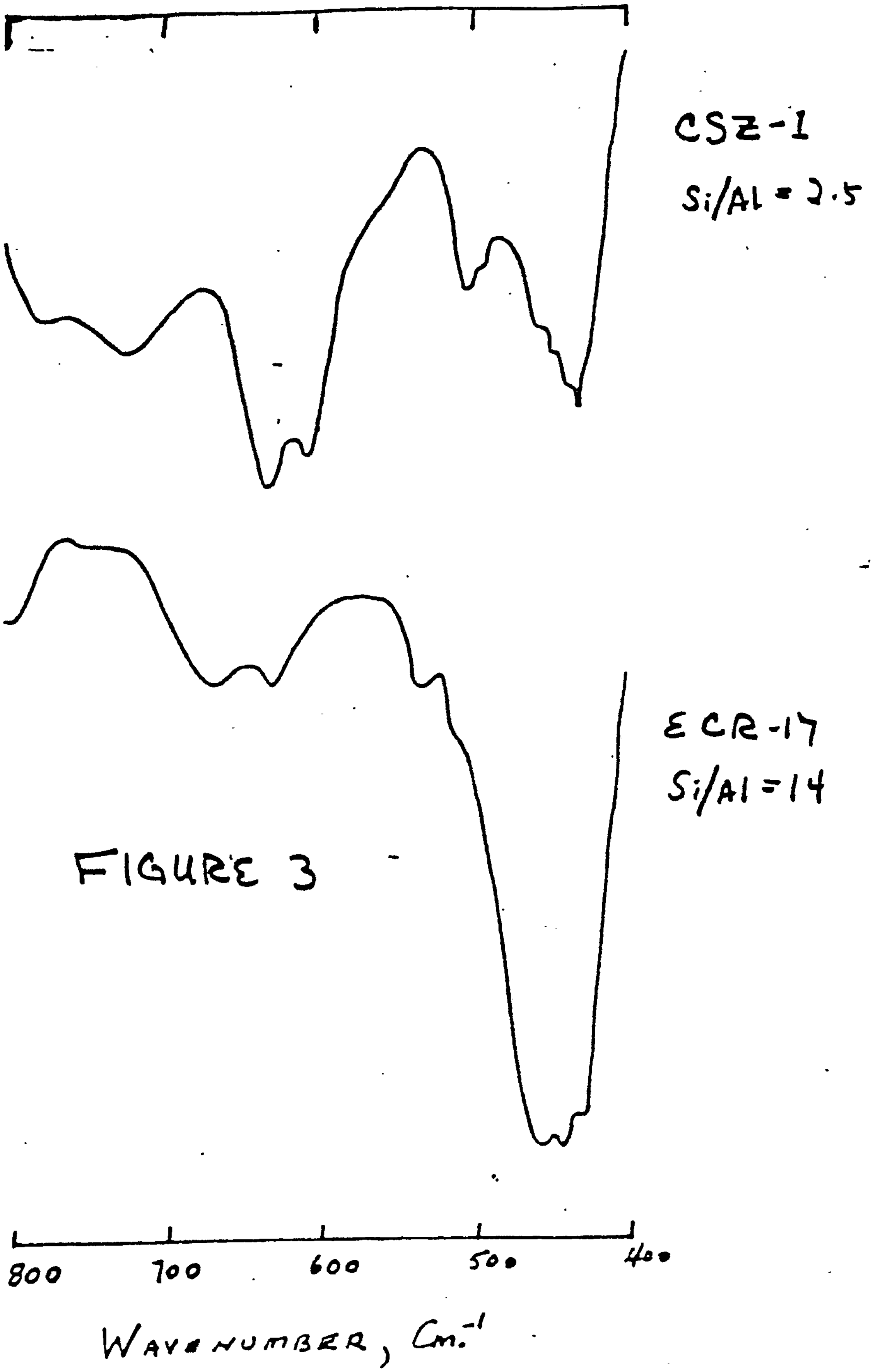


FIGURE 3

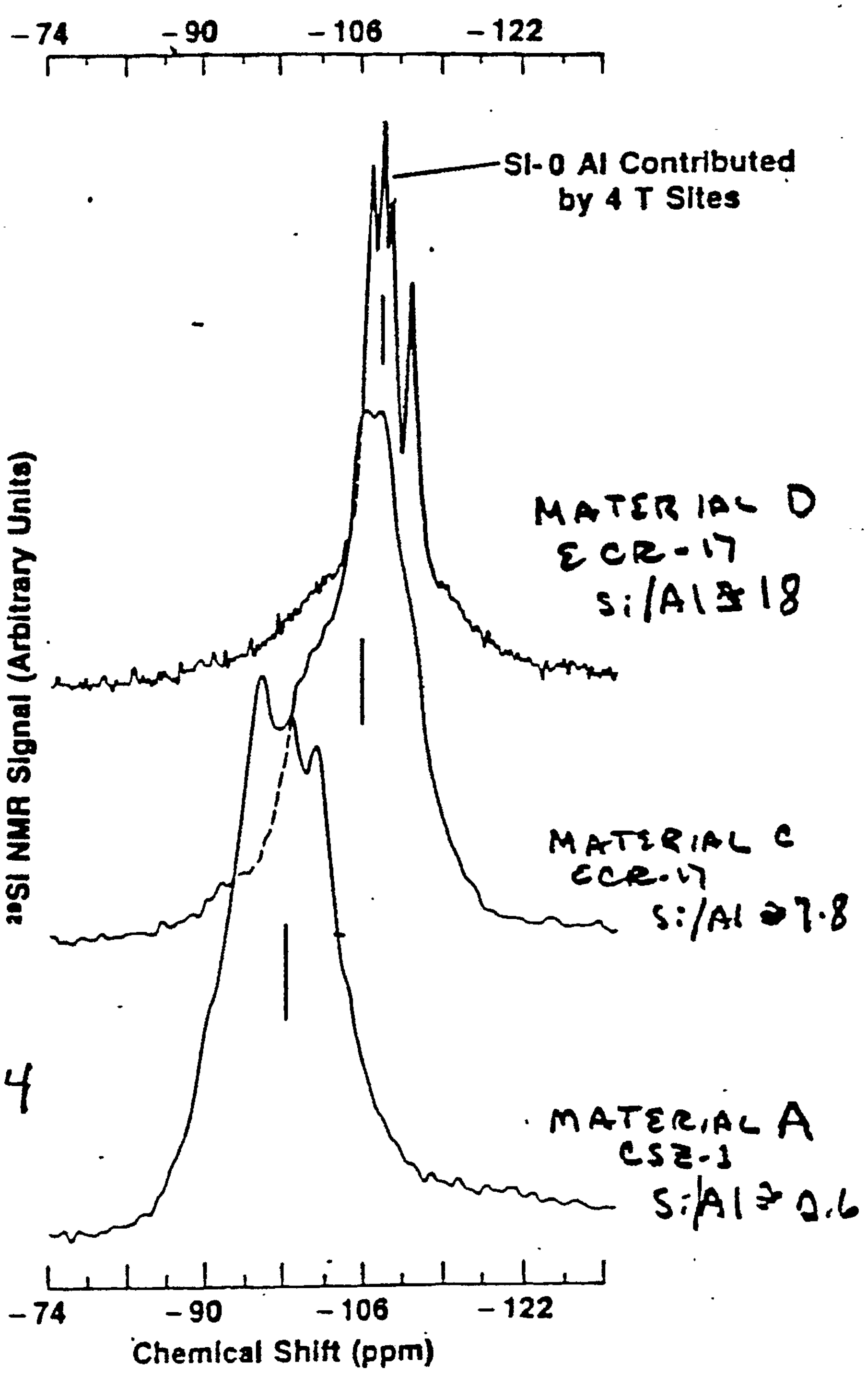
-74
-90
-106
-122
Si-0 Al Contributed by 4 T Sites
MATERIAL D
ECR-17
Si/Al ≅ 18
MATERIAL C
ECR-17
Si/Al ≅ 7.8
MATERIAL A
CSZ-1
Si/Al ≅ 2.6
29Si NMR Signal (Arbitrary Units)
Chemical Shift (ppm)

FIGURE 4